## Europäisches Patentamt
## European Patent Office
## Office européen des brevets

(11) Veröffentlichungsnummer: **0 489 887 B1**

## (12) EUROPÄISCHE PATENTSCHRIFT

(45) Veröffentlichungstag der Patentschrift: **27.12.95**

(51) Int. Cl.⁶: **B60T 8/32**, B60K 28/16, F16D 66/00

(21) Anmeldenummer: **91912095.6**

(22) Anmeldetag: **24.06.91**

(86) Internationale Anmeldenummer:
**PCT/EP91/01173**

(87) Internationale Veröffentlichungsnummer:
**WO 92/00212 (09.01.92 92/02)**

(54) **FAHRZEUG MIT ÜBERWACHUNG DER BREMSENTEMPERATUR**

(30) Priorität: **29.06.90 DE 4020693**
**29.11.90 DE 4038080**

(43) Veröffentlichungstag der Anmeldung:
**17.06.92 Patentblatt 92/25**

(45) Bekanntmachung des Hinweises auf die
Patenterteilung:
**27.12.95 Patentblatt 95/52**

(84) Benannte Vertragsstaaten:
**DE FR GB IT SE**

(56) Entgegenhaltungen:
**WO-A-87/02948**
**FR-A- 2 509 242**

(73) Patentinhaber: **ROBERT BOSCH GMBH**
**Postfach 30 02 20**
**D-70442 Stuttgart (DE)**

(72) Erfinder: **KONRAD, Werner**
**Drosselweg 1**
**D-7141 Schwieberdingen (DE)**
Erfinder: **BEDNARZ, Hermann**
**Theobald-Kerner-Strasse 12**
**D-7000 Stuttgart 50 (DE)**
Erfinder: **POLZIN, Norbert**
**Hohentwielstrasse 141**
**D-7000 Stuttgart 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Stand der Technik

Aus der DE-A1 33 31 297 ist es bekannt, das Motormoment zu reduzieren, wenn festgestellt wird, daß die Temperatur einer Bremse einen vorgegebenen Temperaturwert überschritten hat.

Aus der FR-A 2 509 242 (DE-A 3 127 302) ist ein Antriebsschlupfregelsystem bekannt, bei welchem bei Überschreiten einer vorgegebenen Bremsentemperatur das Regelsystem abgeschaltet wird. Zur Erfassung der Bremsentemperatur sind dabei in einer Ausführung verschiedene Meßeinrichtungen vorgesehen, in einer anderen Ausführung wird die Bestimmung der Bremsentemperatur abhängig vom mittleren Wert des Bremsdrucks und der Raddrehzahl in verschiedenen Zeitintervallen durchgeführt. Das Produkt aus Bremsdruck und Drehzahl in einem vorgebenen Zeitintervall stellt dabei die beim Bremsen in Wärme umgesetzte Energie dar. Überscheitet die auf diese Weise ermittelte Temperatur den Grenzwert Ts, wird die Regelung abgeschaltet. Dabei kann eine Wärmebilanzgleichung auf der Basis der in Wärme umgesetzten Energiemenge und der durch Konvektion und Abstrahlung abgeführten Energiemenge verwendet werden. Temperaturänderungen in Betriebszuständen ohne Bremsbetätigung bzw. beim Fahrzeughalt oder eine Abschätzung der Temperatur beim Fahrtantritt werden nicht vorgeschlagen.

Es ist daher Aufgabe der Erfindung, Maßnahmen zur Berücksichtigung der Temperaturänderungen in Betriebszuständen ohne Bremsbetätigung bzw. beim Fahrzeughalt bei der Bremsentemperaturbestimmung sowie eine Abschätzung der Temperatur beim Fahrtantritt anzugeben.

Dies wird durch die Merkmale der unabhängigen Patentansprüche erreicht.

Vorteile der Erfindung

Bei der Erfindung wird die Bremsentemperatur nicht gemessen, sondern unter Berücksichtigung der verschiedenen Möglichkeiten und unter Nutzung von vorhandenen Signalen errechnet. Das im Anspruch 1 erwähnte Merkmal, den ASR-Betrieb zu berücksichtigen und die ASR gegebenenfalls abzuschalten, ist optional, d.h. bei Fahrzeugen ohne ASR gelten die Merkmale des Anspruch 1 ohne das Merkmal c). Die Funktionen, denen die Temperatur in den verschiedenen Phasen gehorcht, sind von Fahrzeugtyp zu Fahrzeugtyp unterschiedlich und müssen vorab für den Fahrzeugtyp ermittelt werden. Anspruch 3 enthält eine Alternative zur Lösung des Anspuchs 1.

Figurenbeschreibung

Anhand der Zeichnung wird ein Ausführungsbeispiel der Erfindung näher erläutert. Es zeigen

Fig. 1    ein Blockschaltbild eines Ausführungsbeispiels

Fig. 2    ein Flußdiagramm für das Ausführungsbeispiel der Fig. 1

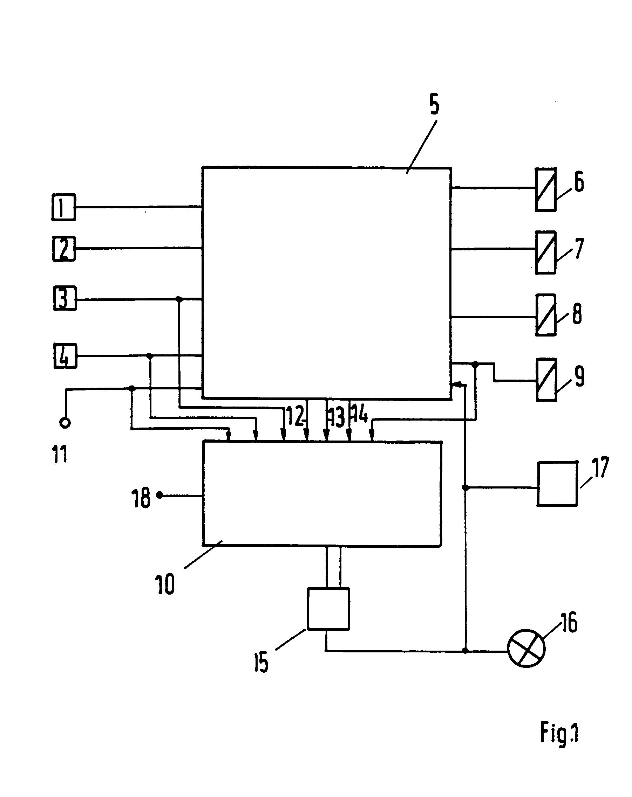

In Fig. 1 sind mit 1 und 2 den Hinterrädern zugeordnete und mit 3 und 4 den Vorderrädern zugeordnete Meßwertgeber für die Radgeschwindigkeiten bezeichnet. Diese liefern ihre Singale an eine Auswerteschaltung 5, die sowohl ein ABS als auch eine ASR beinhaltet. Im ABS-Fall steuert die Auswerteschaltung 5 Magnetventile 6, 7 und 8 zwecks Druckvariation an den Radbremsen. Diese Ventile 6 und 7 werden auch bei ASR zusammen mit einem Ventil 9 verwendet. Letzteres wird über die gesamte ASR-Phase angesteuert und stellt am Eingang der Ventile 6 und 7 Druck zur Verfügung.

In einem Block 10, der auch Teil der Auswerteschaltung 5 sein könnte, wird die Bremstemperatur nachgebildet, wozu diesem Block 10 die Vorderradgeschwindigkeitssignale, das an einer Klemme 11 anstehende Bremslichtschaltersignal, die in der Auswerteschaltung 5 gewonnene der Fahrzeuggeschwindigkeit angenäherte Referenzgeschwindigkeit (Ltg. 12), die bei ASR-Betrieb gebildeten Regelabweichungen für die beiden angetriebenen Räder (Ltg. 13 und 14) und das Ansteuersignal des ASR-Ventils 9 zugeführt werden. In einem Vergleicher 15 werden die für die beiden angetriebenen Räder ermittelten Temperaturwerte mit einer Grenztemperatur verglichen und bei Überschreiten der Grenztemperatur wird ein Signal erzeugt, das einer Warnlampe 16 und auch der Auswerteschaltung 5 zur Abschaltung des ASR und einem Glied 17 zugeführt wird, das das Motormoment reduziert. Die Abschaltung der ASR und die Motormomentreduzierung wird man vorzugsweise alternativ anwenden.

Allgemein wird bei Bremsbetätigung ausgehend von der Temperatur beim Bremsbeginn in vorgegebenen kleinen Zeitabschnitten Temperaturerhöhungen $\Delta T1$ in Abhängigkeit von der Fahrzeugverzögerung (-V) und der Fahrzeuggeschwindigkeit (VF) und fahrzeugspezifischen Konstanten K1 (Tneu = Talt + $\Delta T1$; $\Delta T1 = f(-V, VF, K1)$) ermittelt werden.

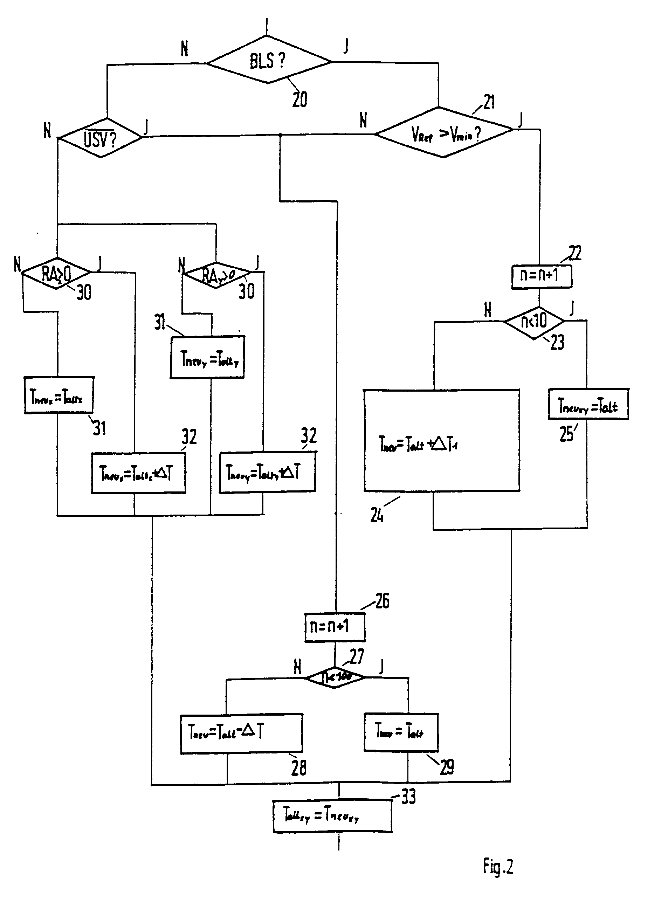

Die Ermittlung der Bremsentemperatur im Block 10 wird nun anhand des Flußdiagramms der Fig. 2 beschrieben.

In einem ersten Block 20 wird ermittelt, ob gebremst wird. Ist ein Bremslichtschaltersignal vorhanden, so wird in einem Block 21 festgestellt, ob das Fahrzeug in Bewegung ist, die Referenzgeschwindigkeit z.b. 2,5 Km/h ist. Ist dies der Fall, dann wird ein gebremstes Fahrzeug unterstellt. Die Zykluszeit des Rechners in Block 10 ist 10 msec. Eine Änderung des Temperaturwerts soll jeweils erst nach 100 msec vorgenommen werden. Deshalb wird in einem Block 22 in jedem Zyklus eine Größe n um 1 erhöht.

Ist sie gleich 10, so gibt ein Block 23 ein Signal auf seinem linken (Nein-) Ausgang ab (n < 10) und ein Block 24 erhöht die vorher ermittelte Temperatur $T_{alt}$ um $\Delta T_1$ zum neuen Temperaturwert $T_{neu}$. Für ein spezielles Fahrzeug wurde die jeweilige Temperaturerhöhung nach folgender Beziehung ermittelt

$$\Delta T_1 = a \cdot \Delta v + \frac{V_{ref}^2}{b} = 5.6\Delta v + \frac{V_{ref}^2}{250}.$$

Hierzu bedeuten: $\Delta v$ die Geschwindigkeitsänderung seit der letzten Messung, $V_{ref}$ die Referenzgeschwindigkeit und a und b Konstante. Die obige Beziehung gilt auch für ABS-Bremsungen. $\Delta T_1$ und $T_{neu}$ und $T_{alt}$ sind in °C angegeben. Nach der Anpassung beginnt n wieder mit 1. Bis zur nächsten Änderung bietet ein Block 25 die im Block 24 ermittelte Temperatur als den gültigen Temperaturwert an.

Wird gebremst und steht das Fahrzeug oder wird nicht gebremst, wird die Bremsentemperatur ausgehend von einer Anfangstemperatur größer als die Umgebungstemperatur in vorgegebenen kleinen Zeitabschnitten eine Temperaturerniedrigung $\Delta T2$ in Abhängigkeit von der vorhandenen Temperatur, fahrzeugspezifischen Konstanten K2 und ggf. der Fahrzeuggeschwindigkeit bis zum Erreichen der Umgebungstemperatur TU ($Tneu = Talt - \Delta T2$; $\Delta T2 = f(Talt, K2)$) ermittelt.

Wird gebremst und steht das Fahrzeug ($V_{ref} < V_{min}$) oder wird nicht gebremst und ASR ist nicht in Betrieb (BLS nicht vorhanden; Ventil 9 nicht angesteuert d.h. Ansteuerspannung USV nicht vorhanden = $\overline{USV}$) so ist der mittlere Zweig, der Abkühlzweig wirksam. Hier soll nur jeweils nach einer Sekunde eine Korrektur durchgeführt werden. Blöcke 26 und 27 entsprechen den Blöcken 22 und 23 mit dem Unterschied, daß erst bei n = 100 in einem Block 28 ein neuer Temperaturwert $T_{neu}$ ermittelt wird. Dieser wird bei dem gewählten Fahrzeugtyp wie folgt ermittelt:

$$T_{neu} = T_{alt} + \Delta T_2 \text{ und } \Delta T_2 = c \cdot T_{alt} + d \cdot T_{alt}^2$$

wobei c = 0,005 und d = $0,25 \cdot 10^{-4}$ sind. Zwischen zwei Temperaturermittlungen bietet der Block 29 die zuvor ermittelte Temperatur als gültigen Temperaturwert an.

In ASR-Phasen mit Bremseneingriff ist der linke Zweig wirksam. Während die bisher behandelten Zweige für die Bremsen beider Fahrzeugseiten gültig waren, ist im ASR-Fall eine getrennte Ermittlung der Temperatur für beide angetriebenen Räder notwendig. Der ASR-Zweig ist deshalb doppelt vorhanden; die Fahrzeugseiten werden durch x und y unterschieden.

Ist das Ventil 9 angesteuert (USV ist vorhanden, d.h. $\overline{USV}$ ist nein), dann wird in Blöcken 30 geprüft, ob die Regelabweichung RA größer 0 ist. Dann wird durch die ASR das zugehörige Rad mit Druck beaufschlagt. In jedem Rechnerzyklus (alle 10 msec) wird hier in Blöcken 32 $T_{neu} = T_{alt} + \Delta T_3$ gebildet, wobei für den gewählten Fahrzeugtyp eine Erhöhung um $\Delta T_3 = e$, (e z.B. $0,1 \cdot \lambda$ pro 10 msec) gewählt wurde. Dabei herrscht ein mittlerer Regeldruck von ca. 30 bar. Ist die Regelabweichung 0, dann wird durch die Blöcke 31 der vorher ermittelte Temperaturwert beibehalten. Ein Schlußblock 33 übernimmt schließlich den gerade gültigen Temperaturwert bzw. das ihn darstellenden Signal und gibt dieses zum Vergleicher 15 weiter.

Über eine Klemme 18 wird dem Block 10 der Fig. 1 die Umgebungstemperatur zugeführt, die bei Start des Fahrzeugs und kalter Bremse als Ausgangstemperatur $T_{alt1}$ benutzt wird. Während der Fahrt wird jeweils die zuletzt ermittelte Temperatur als Ausgangstemperaturwert $T_{alt1}$ benutzt.

Bei Abschalten der Zündung darf der ermittelte Bremsentemperaturwert nicht verloren gehen. Vielmehr muß die Temperatur auch in dieser Phase weiter gemäß dem mittleren Zweig der Fig. 2 ermittelt werden bis die Umgebungstemperatur erreicht ist. Erst nach Erreichen der Umgebungstemperatur kann der Block 10 abgeschaltet werden. Bei einem erneuten Anfahren bei noch nicht völlig abgekühlter Bremse muß von dem errechneten Temperaturwert ausgegangen werden.

Wird das Motormoment reduziert, so kann dies so erfolgen, daß die Fahrzeuggeschwindigkeit auf einen Wert reduziert wird, bei der noch ein Abbremsen zum Stillstand möglich ist, ohne daß die Bremse überhitzt wird. Dieser Grenztemperaturwert kann für jeden Fahrzeugtyp ermittelt werden.

Im folgenden wird eine Alternative zu der oben genannten Möglichkeit beschrieben. Für die Wärmebilanz an der Bremsscheibe gilt näherungsweise der folgende Ansatz für die Leistungen N:

- aufgenommene Leistung durch Druck im Radbremszylinder: $N_{auf} = K_{Rad} \cdot P_{Rad} \cdot n_{Rad}$
- abgegebene Leistung durch Konvektion: $N_{Konv} = K_{Konv} \cdot f_1(n_{Rad, \Delta})$
- abgegebene Leistung durch Strahlung: $N_{Strahl} = K_{Strahl} \cdot T^4 \approx K_{Strahl} \cdot (\Delta + 273)$
  und für die in der Bremscheibe gespeicherte Wärmemenge A: $A_{Sch} = K_C \cdot \Delta$,

die zu folgender Bilanzgleichung zusammengeführt werden kann:

$$( N_{auf} - N_{Konv} - N_{Strahl}) \cdot t = A_{Sch} \tag{1}$$

mit:

| | |
|---|---|
| $t$ : | Zeitdauer |
| $P_{Rad}$ : | Druck im Radbremszylinder |
| $n_{Rad}$ : | Raddrehzahl |
| $T$ : | absolute Temperatur |
| $\Delta$ : | Differenz-Temperatur zur Umgebungstemperatur |
| $K_{Rad}, K_{Konv}, K_{Strahl}, K_C$ : | Scheiben- und FZ-spezifische Größen |
| $f_1$ : | Scheiben- und FZ-spezifische Funktion, die ermittelt werden muß und im Steuergerät-ROM abgelegt werden kann. |

Bei manchen ASR-Systemen wird der Druck für die ASR-Funktion durch eine selbstansaugenden Rückförderpumpe erzeugt, deren Maximaldruck durch ein Druckbegrenzungsventil begrenzt wird. Bei angelaufener ASR-Regelung kann somit von einen konstanten Vordruck für ASR ausgegangen werden.

Zur Sicherstellung der ASR-Funktion muß nun ein bestimmter Druck in der Bremsscheibe vorhanden sein, der durch Ansteuern der Regelventile erzeugt wird. Da nun die Druck-Volumen-Kennlinie des Bremskreises bekannt ist und auch gemäß Voraussetzung der ASR-Vordruck konstant ist, kann nun jeder Druckaufbau- und Abbauzeit $t_{auf}$, $t_{ab}$ eine Volumenänderung, bzw. Druckänderung zugeordnet werden, die durch Integration, bzw. Summierung der Einzelbeträge eine näherungsweise Angabe des Absolutendruckes an der Bremszange erlaubt. Durch Multiplikation dieses Druckwertes mit der im Steuergerät bekannten Raddrehzahl und der Konstanten $K_{Rad}$ erhält man die aktuelle, in die Bremsscheibe eingebrachte Leistung.

Somit stellt die Gleichung (1) für jeden Zeitpunkt eine inplizierte Bestimmungsgleichung für die Scheibentemperatur $\Delta$ dar, da alle anderen Größen bekannt und im Steuergerät abgelegt sind. Erreicht nun diese Scheibentemperatur $\Delta$ einen Grenzwert $\Delta$max, so kann daraus eine Aktion hergeleitet werden.

Durch Lösung der Gleichung (1) für jeden Zeitintervall, z.B. Zykluszeit des $\mu$C, und Fortschreibung bzw. Speicherung des letzten Ergebnisses erhält man den Temperaturverlauf der Bremsscheibe an diskrete Zeitmarken. Die zur Lösung von Gleichung (1) erforderlichen Parameter müssen in verschiedenen Versuchsreihen gemessen, bzw. berechnet werden und im Steuergerät-ROM abgelegt sein.

Es besteht jedoch ein schon oben angesprochenes Problem: Mit Abschalten des Steuergeräts (z.B. nach "Abwürgen" des Motors) "vergißt" das Steuergerät die Vorgeschichte und beginnt bei t = 0, obwohl die Bremsscheiben schon aufgeheizt sind.

Da häufige ASR-Funktion mit zwischenzeitlichem Abziehen des Zündschlüssels oft auftreten kann (z.B. "Abwürgen" des Motors, Taxi-Betrieb in nördlichen Ländern etc.) und somit die Bremsscheiben erhebliche Übertemperatur aufweisen können, muß auch in den Phasen mit abgezogenem Zündschlüssel bzw. im Fahrbetrieb ohne ASR-Funktion die Temperatur weiter "beobachtet" werden.

Folgende Möglichkeiten bestehen hier:

a) Der Wärmekapazität der Bremsscheibe wird ein Kondensator (oder auch Akkumulator) zugeordnet, der mit zu $N_{auf}$, $N_{Konv}$ und $N_{Strahl}$ proportionalen Strömen geladen, bzw. entladen wird. Bei Erreichen einer zu $\Delta_{max}$ proportionalen Spannung wird gewarnt und/oder die ASR-Funktion abgeschaltet. Bei Abziehen des Zündschlüssels wird auch das Steuergerät abgeschaltet. In diesem Zustand wird parallel zum Kondensator ein oder mehrere derartige Widerstände (evtl. nichtlinear als PTC, NTC, Varistor, Dioden, Transistoren oder Zusammenschaltungen davon) geschaltet, daß das Entladungsverhalten des Kondensator-/Widerstandssystemsdem Abkühlungsmechanismus der Bremsscheibe bei stehenden Rädern entspricht. Bei Wiedereinschalten des Steuergeräts wird die "Beobachtung" der Temperatur somit am richtigen Wert weiter fortgesetzt.

b) Der Wärmekapazität der Scheibe wird ein elektrischer Widerstand zugeordnet (evtl. Nichtlinear als NTC, PTC, Varistor, Dioden, Transistoren oder Zusammenschaltungen davon), der thermisch so verpackt

wird, daß dessen Abkühlkurve der Scheibenstillstandskalorik entspricht. Durch Speisen mit einem Strom, der der Leistungsbilanz $N_{auf}$ - $N_{Konv}$ - $N_{Strahl}$ aus (1) entspricht, wird der Widerstand aufgeheizt und die Spannung ändert sich. Bei Erreichen einer zu $\Delta_{max}$ äquivalente Spannung wird gewarnt und/oder die ASR- Funktion abgeschaltet. Bei abgeschaltetem Steuergerät und Wiedereinschalten verhält sich das System wie unter a) beschrieben.

c) Die Scheibenkalorik wird durch einen digitalen "Beobachter" im RAM/ROM des Steuergeräts nachgebildet. Nach Abziehen des Zündschlüssels bleibt nun über eine interne Steuerung das RAM und der µC solange eingeschaltet, bis der Beobachter ein $\Delta_{min}$ errechnet hat und dann das Steuergerät vollends abschaltet.

d) Im ASR-Steuergerät ist neben dem digitalen Beobachter eine Schaltzeit-Uhr und ein batteriegepuffertes RAM für den Abschaltzeitpunkt vorhanden. Mit Abziehen des Zündschlüssels wird das Steuergerät abgeschaltet, jedoch wird der Abschaltzeitpunkt im RAM gespeichert. Bei Wiedereinschalten des Steuergeräts wird die seit dem letzten Ausschalten verflossene Zeit berechnet und es wird dann mit der Abkühlungscharakteristik bei stehenden Rädern im nun wieder aktiven Beobachter die bis zum Einschaltzeitpunkt erreichte Abkühlung "nachberechnet". Somit wird bei Wiedereinsetzen der ASR-Funktion von der richtigen Scheibentemperatur ausgegangen.

e) wie d), nur statt der Einschaltzeit-Uhr im Steuergerät wird die Zeit der Fahrzeuguhr - die selbstverstänslich entsprechende Ausgänge aufweisen muß eingelesen und im RAM gespeichert. Sonstige "Temperatur" - Berechnung wie unter d).

Die unter a) bis e) skizzierten Fälle berücksichtigen nicht die Bremsscheibenerwärmung durch Brems-/ ABS-Betrieb. Da im Teilbremsbereich keine Information über den Bremsbereich vorliegt, bzw. im ABS-Fall der HZ-Druck nicht bekannt ist, kann man nur näherungsweise Angaben machen. Voraussetzung: ausgekuppelt, Verzögerung nur durch Bremsen (BLS-Signal).

f) Scheibenerwärmung durch Bremsen: "Beobachtung" durch FZ-Verzögerung.

f1) FZ mit Heckantrieb: Unter Zugrundelegung der Vollastkennlinie der Bremskraftverteilung (oder der statistischen Kennlinie) kann aus der aktuellen FZ-Verzögerung $a_F$ (die von den Drehzahlfühlersignalen berechnet werden kann) die zugeordnete Hinterachs-Bremskraft $B_H(a_F)$ ermittelt werden, aus der sich die Wärmeleistung pro Scheibe errechnet zu:

$$N_{auf} = K'_{Rad} \cdot B_H \cdot n_{Rad} \cdot \tfrac{1}{2} \text{ (1/2 wegen zwei Hinterrädern).}$$

Temperatur-Beobachtung dann weiter wie unter a) - e)) beschrieben.

f2) FZ mit Frontantrieb: Es wird wie unter f1) verfahren, nur ist hier zur Berechnung der Vorderachsbremskraft $B_V(a_F)$ von der Leerkennlinie des Bremkraftverteilungsdiagramms auszugehen:

$$N_{auf} = K''_{Rad} \cdot B_V \cdot n_{Rad} \cdot \tfrac{1}{2}$$

$K'_{Rad}$, $K''_{Rad}$ sind FZ-spezifische Parameter,
$B_H(a_F)$, $B_V(a_F)$ sind verzögerungs- und FZ-Spezifische Parameter, die im Versuch gemessen, bzw. berechnet werden müssen und im ROM abgelegt sind. Da bei f1), f2) die tatsächliche Bremskraftverteilung nicht bekannt ist, muß vom worst case ausgegangen werden, d.h. im anschließenden ASR-Fall wird in der Regel bei zu "kleiner" Scheibentemperatur gewarnt, bzw. abgeschaltet.

g) Bremsen mit elektronischer Bremskraftverteilung, "Beobachtung" durch FZ-Verzögerung:

g1), g2): Es wird wie in f1), f2) vorgegangen, nur ist hier von der tatsächlich vorhandenen Bremskraftverteilung auszugehen, die bei EBKV-Algorithmen bekannt sind. Somit kann die aktuelle Scheibentemperatur genauer ermittelt werden.

Bei Paßabfahrten kann es nun zu einer Scheibenerwärmung kommen, obwohl keine oder nur eine geringe FZ-Verzögerung, bzw. sogar geringe FZ-Beschleunigung vorliegt. Hier kann mit einen weiteren Hilfssignal die Temperatur beobachtet werden:

h) FZ-Verzögerungssensor ($a_F$-Sensor). Das $a_F$ - Signal ist auch bei Bergabfahrt unabhängig davon, ob das FZ verzögert oder mit konstanter Geschwindigkeit fährt, wenn ausgekuppelt (worst case) ein Maß für die FZ-Verzögerung durch Bremseneingriff, d.h. die unter f) und g) beschriebene Methode sind entsprechend verwendbar, wenn eingekuppelt ist.

Vorteil der Erfindung ist, daß bei ASR-Systemen die Bremsscheibentemperatur, vor allem der Antriebsräder, "beobachtet" werden kann und somit neben der vorgegebenen Sperrdifferentialwirkung auch eine vollwertige Antriebsschlupfregelung mit Bremseneingriff möglich ist, d.h. Anfahren aus dem Stand bei hohem Motorüberschußmoment. Bei Erreichen einer maximalen Scheibentemperatur wird die ASR-Funktion abgeschaltet. Nach Ablauf einer "mitgerechnete" Abkühlzeit und Unterschreiten einer

Mindesttemperatur wird die ASR-Funktion wieder zugelassen. Mit Ausnahme des Falles h) gelingt die "Beobachtung" der Scheibentemperaturen nur durch Soft-, bzw. Hardware-Maßnahmen im Steuergerät und nicht durch zusätzliche Sensoren im FZ. Selbstverständlich kann die "Beobachtung" der Bremsscheibentemperatur durch Verwendung weiterer Sensoren, vorzugsweise von Drucksensoren an den Antriebsrädern, verbessert werden, da hierdurch eine bessere Aussage zur Reibkraft an der Bremscheibe und damit der eingebrachten Leistung gemeldet werden kann und zwar unabhängig davon, ob ein- oder ausgekuppelt ist oder Berg- oder Talfahrt vorliegt. Es werden die Konvektions- und Strahlungsanteil sowie die Wärmespeicherung in der Bremsscheibe wie angegeben berücksichtigt. Weiterhin können diese Zusatzparameter auch vorteilhaft für Bremsbetrieb, ABS, ASR und EBKV mit verwendet werden.

**Patentansprüche**

1. Verfahren zur Überwachung der Bremsentemperatur und zur Warnung des Fahrers und/oder zur Motormomentenreduzierung und/oder zur Abschaltung einer vorhandenen Antriebsschlupfregelung bei Erreichen einer vorgegebenen Grenztemperatur an der Bremse, wobei

a) bei Bremsbetätigung ausgehend von der Temperatur bei Bremsbeginn in vorgegebenen kleinen Zeitabständen Temperaturerhöhungen in Abhängigkeit von der Fahrzeugverzögerung und der Fahrzeuggeschwindigkeit und fahrzeugspezifischen Konstanten ermittelt werden (Tneu = Talt + ΔT1; ΔT1 = f(- V, VF, K1)),

b) ohne Bremsbetätigung und bei Fahrzeughalt ausgehend von einer Abfangstemperatur größer als die Umgebungstemperatur in vorgegebenen kleinen Zeitabständen eine Temperaturerniedrigung (ΔT2) in Abhängigkeit von der vorhandenen Temperatur, fahrzeugspezifischen Konstanten und ggf. der Fahrzeuggeschwindigkeit bis zum Erreichen der Umgebungstemperatur (TU) ermittelt werden (Tneu = Talt - ΔT2; ΔT2 = f(Talt, K2)),

c) bei Fahrtbeginn und abgekühlter Bremse als Anfangstemperatur die Umgebungstemperatur und bei Wiederanfahrt bei noch nicht abgekühlter Bremse als Anfangstemperatur der gerade gemäß b) bestimmte Temperaturwert berücksichtigt wird,

d) und wobei die so ermittelte Temperatur als Bremsentemperatur benutzt wird.

2. Verfahren nach Anspruch 1, dadurch gekennzeichnet, daß bei Vorhandensein einer Antriebsschlupfregelung mit Bremseneingriff jeweils während der Bremsphasen ausgehend von der Anfangstemperatur in vorgegebenen kleinen Zeitabständen Tem peraturerhöhungen (ΔT3) in Abhängigkeit von wenigstens fahrzeugspezifischen Konstanten (K3) ermittelt werden.

3. Verfahren nach Anspruch 1, dadurch gekennzeichnet, daß die Ermittlung der Bremsentemperatur für mehrere Bremsen getrennt erfolgt und daß die Warnung bzw. die Reduzierung des Motormoments bzw. die Abschaltung der Antriebsschlupfregelung erfolgt, wenn an einer Bremse die Grenztemperatur erreicht wird.

4. Verfahren zur Überwachung der Bremsentemperatur und zur Warnung des Fahrers und/oder zur Motormomentenreduzierung und/oder zur Abschaltung einer vorhandenen Antriebsschlupfregelung bei Erreichen einer vorgegebenen Grenztemperatur an der Bremse, wobei die Bremsentemperatur nach Maßgabe der Wärmebilanz an der Bremse errechnet wird, wobei

a) bei Bremsbetätigung die von der Bremse aufgenomme Wärmeleistung bestimmt wird,

b) die abgestrahlte Leistung auf der Basis der ohne Bremsbetätigung abgelaufenen Zeit ermittelt wird, wenn keine Bremsbetätigung oder ein Fahrzeughalt vorliegt, und die Bremstemperatur nach Maßgabe der aufgenommen und der abgeführten Leistung ermittelt wird,

c) bei Fahrtbeginn und abgekühlter Bremse als Anfangstemperatur die Umgebungstemperatur und bei Wiederanfahrt bei noch nicht abgekühlter Bremse als Anfangstemperatur der gerade gemäß b) bestimmte Temperaturwert berücksichtigt wird,

d) und die so ermittelte Temperatur als Bremsentemperatur benutzt wird.

**Claims**

1. Method for monitoring the brake temperature and for warning the driver and/or for reducing the engine torque and/or for disconnecting existing wheel-slip traction control on reaching a predetermined limiting temperature on the brake,

a) in the event of brake operation, temperature increases being determined, as a function of the vehicle deceleration and the vehicle speed and vehicle-specific constants, at predetermined short time intervals, starting from the temperature at the start of braking (Tnew = Told + $\Delta$T1; $\Delta$T1 = f(-V, VF, K1)),

b) without brake operation and when the vehicle is stationary, a temperature reduction ($\Delta$T2) being determined as a function of the existing temperature, vehicle-specific constants and, if appropriate, the vehicle speed, until the environmental temperature (TU) is reached, at predetermined short time intervals, starting from an initial temperature which is greater than the environmental temperature (Tnew = Told - $\Delta$T2; $\Delta$T2 = f(Told, K2)),

c) the environmental temperature being used as initial temperature at the start of driving and where the brakes are cooled, and the temperature value just determined in accordance with b) being used as the initial temperature on restarting when the brakes have not yet cooled,

d) and the temperature determined in this way being used as the brake temperature.

2. Method according Claim 1, characterized in that, if wheel-slip traction control with braking action is provided, temperature increases ($\Delta$T3) are determined as a function of at least vehicle-specific constants (K3), at predetermined short time intervals, starting from the initial temperature, during the braking phases in each case.

3. Method according to Claim 1, characterized in that the determination of the brake temperature is carried out separately for a plurality of brakes, and in that the warning or the reduction in the engine torque or the disconnection of the wheel-slip traction control is carried out when the limiting temperature is reached on one brake.

4. Method for monitoring the brake temperature and for warning the driver and/or for reducing the engine torque and/or for disconnecting existing wheel-slip traction control on reaching a predetermined limiting temperature on the brake, the brake temperature being calculated on the basis of the thermal balance at the brake,

a) the thermal power absorbed by the brake being determined during brake operation,

b) the emitted power being determined on the basis of the time which has elapsed without brake operation if there is no brake operation or the vehicle is stationary, and the brake temperature being determined on the basis of the absorbed power and the dissipated power,

c) the environmental temperature being used as initial temperature at the start of driving and where the brakes are cooled, and the temperature value just determined in accordance with b) being used as the initial temperature on restarting when the brakes have not yet cooled,

d) and the temperature determined in this way being used as the brake temperature.

**Revendications**

1. Procédé de contrôle de la température des freins et d'avertissement du conducteur et/ou de réduction du couple moteur et/ou de débranchement d'un système de régulation du glissement à l'entraînement dans le cas où l'on atteint une température limite prédéfinie sur les freins, procédé dans lequel :

a) lors de l'actionnement des freins, en partant de la température au début du freinage à de petits intervalles de temps prédéfinis on détermine des augmentations de la température en fonction de la décélération du véhicule et de la vitesse du véhicule et de constantes spécifiques au véhicule (Tneu = Talt + $\Delta$T1; $\Delta$T1 = f (-V, VF, K1).

b) on détermine sans actionnement des freins et le véhicule étant à l'arrêt en partant d'une température initiale supérieure à la température ambiante à de petits intervalles de temps prédéfinis un abaissement de la température (DT2) en fonction de la température existante, des constantes spécifiques au véhicule et le cas échéant de la vitesse du véhicule jusqu'à ce que la température ambiante (TU) soit atteinte (Tneu = Talt - DT2); DT2 = f (Talt, K2).

c) on prend en considération au démarrage, les freins étant refroidis, comme température initiale la température ambiante et lors d'un redémarrage alors que les freins ne sont pas encore refroidis on prend en considération comme température initiale la valeur de la température déterminée précisément selon le paragraphe b).

d) et l'on utilise la température ainsi déterminée comme température de freinage.

**2.** Procédé selon la revendication 1, caractérisé en ce que, quand il existe une régulation du glissement à l'entraînement avec venue en prise des freins, on détermine respectivement pendant la phase de freinage en partant de la température initiale à de petits intervalles de temps prédéfinis Tem des augmentations de la température ($\Delta T3$) en fonction au moins de constantes spécifiques au véhicule (K3).

**3.** Procédé selon la revendication 1, caractérisé en ce que la détermination de la température des freins a lieu séparément pour plusieurs freins et en ce que l'avertissement du conducteur ou la réduction du couple moteur ou le débranchement du système de régulation du glissement à l'entraînement a lieu quand une température limite est atteinte sur un frein.

**4.** Procédé de contrôle de la température des freins et d'avertissement du conducteur et/ou de réduction du couple moteur et/ou de débranchement d'un système de régulation du glissement à l'entraînement dans le cas où l'on atteint une température limite prédéfinie sur les freins, la température des freins étant calculée selon l'indication du bilan thermique effectué sur le frein, dans lequel :

a) lors de l'actionnement des freins on détermine l'énergie calorifique absorbée par les freins,

b) on détermine l'énergie dissipée sur la base du temps qui s'est écoulé sans actionnement des freins, quand il n'y a pas d'actionnement des freins ni d'arrêt du véhicule et on détermine la température des freins selon la mesure de l'énergie absorbée et de l'énergie dissipée,

c) au démarrage et les freins étant refroidis on prend en considération comme température initiale la température ambiante et lors du redémarrage on prend en considération quand les freins ne sont pas encore refroidis comme température initiale la valeur de la température qui a été précisément déterminée selon le paragraphe b),

d) et l'on utilise la température ainsi déterminée comme température de freinage.

Fig.1

Fig.2